# FASCICULE DE BREVET EUROPEEN

(11) **EP 1 057 396 B1**
(45) Date de publication et mention de la délivrance du brevet: **28.07.2004**
(21) Numéro de dépôt: 00420108.3
(22) Date de dépôt: 23.05.2000
(51) Int. Cl.: A01D 34/416, A01D 34/00

(54) **Tête de coupe pour débroussailleuse ou taille-bordures**
Schneidekopf für Buschmäher oder Kantentrimmer
Cutter head for brushcutter or edge trimmer

(30) Priorité: 04.06.1999 FR 9911704
(43) Date de publication de la demande: 06.12.2000
(73) Titulaire: SPEED FRANCE, 69658 Arnas (FR)
(72) Inventeur: Legrand, Emmanuel, 01480 Villeneuve (FR)
(74) Mandataire: Bratel, Gérard

(56) Documents cités:
- DE-A- 2 444 610
- GB-A- 1 583 521
- GB-A- 2 214 048
- NL-A- 8 302 111
- US-A- 4 513 563

## Description

La présente invention concerne les appareils de motoculture communément appelés débroussailleuses et taille-bordures, destinés à couper la végétation au moyen de fils de coupe. Cette invention s'intéresse, plus particulièrement, aux têtes de coupe rotatives pour de tels appareils.

Ces appareils sont équipés généralement d'un moteur thermique ou électrique qui entraîne en rotation, à une vitesse élevée pouvant être comprise entre environ 3000 tours/minute et 12000 tours/minute, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur la végétation rencontrée.

On connaît actuellement deux grandes catégories de têtes de coupe pour ce genre d'appareils. Le premier type de tête contient une bobine de fil de coupe, que l'on peut progressivement dévider au fur et à mesure de l'usure ou de la casse du fil utilisé. Le second type connu de tête, auquel s'apparente aussi la présente invention, n'utilise pas de bobine de fil, mais seulement un ou plusieurs brins de fil de coupe, de relativement faible longueur, qu'il convient de fixer individuellement sur la tête. En ce qui concerne ce dernier type de tête de coupe, il peut être fait référence aux documents US-A-4513563, NL-A-8302111, GB-A-2214048 et GB-A-1583521. Dans certains parmi ces documents, les brins de fil de coupe sont pliés en leur milieu, qui constitue aussi leur zone de fixation, de manière à former chacun deux tronçons coupants parallèles de fil, sensiblement de même longueur.

Il peut aussi être fait référence ici au document DE-A-2444610 (figure 2), qui concerne une faucheuse et non une débroussailleuse ou un taille-bordures, et dans laquelle les deux tronçons parallèles du brin de fil métallique, qui forme une boucle, sont liés entre eux de sorte que ces tronçons ne forment pas deux éléments coupants souples distincts, mais réalisent un organe de coupe unique, rigide. Cette réalisation reste, structurellement et fonctionnellement, éloignée de l'objet de la présente invention, tel que défini ci-après.

Toutes les têtes de coupe actuelles, avec ou sans bobine de fil de coupe, sont difficiles à recharger, et/ou d'une structure compliquée et coûteuse, et posent encore divers problèmes.

Entre autres, les fils de coupe traditionnels, sous forme de monofilaments lisses, sont bruyants en fonctionnement et engendrent ainsi des nuisances sonores. Pour tenter de réduire le bruit de fonctionnement, les voies de recherches actuelles consistent à prévoir des fils de coupe de conformation spéciale, en général non lisses : fils ondulés, fils à nervures ou à gorges, fils à revêtement granuleux, etc...

Si l'on considère plus particulièrement les réalisations des documents US-A-4513563, NL-A-8302111 et GB-A-2214048 et GB-A-1583521 précités, on constate que les deux tronçons parallèles de chaque brin de fil plié y sont toujours situés dans deux plans distincts, perpendiculaires à l'axe de la tête, c'est-à-dire qu'ils possèdent un certain décalage axial l'un par rapport à l'autre, et ne sont pas contenus dans un même plan perpendiculaire à l'axe de la tête. Une telle configuration ne permet pas d'abaisser le bruit de fonctionnement de la tête de coupe.

Or il a été constaté, de façon surprenante, que le montage de deux tronçons de fil libres disposés "en parallèle", et dans le même plan, conduisait à une diminution sensible du niveau sonore en cours de fonctionnement, même en utilisant un fil lisse et de section ordinaire (ronde ou carrée).

Partant de ce constat, l'invention a pour objet une tête de coupe pour débroussailleuse ou taille-bordures, du genre de celles utilisant des brins de fil de coupe de relativement faible longueur, retenus individuellement sur la tête, le ou les brins de fil de coupe formant une ou des paires de tronçons coupants de fil libres, parallèles et sensiblement de même longueur, caractérisé en ce que les deux tronçons coupants de fil de la ou chaque paire s'étendent dans un même plan perpendiculaire à l'axe de la tête, de manière à réduire le niveau sonore en cours de fonctionnement.

Ainsi, la proximité (variable selon le diamètre) des tronçons de fil de coupe, associés par paires, crée une interaction entre les turbulences de chaque tronçon de fil, qui réduit la tendance de ces tronçons de fils à vibrer : la turbulence du tronçon du fil situé en amont (par référence au sens de rotation de la tête) "bloque" la turbulence du tronçon de fil situé en aval, et réduit par ce fait la turbulence globale et le bruit généré. Les essais effectués par le Demandeur ont confirmé la réalité de ce phénomène, et sa permanence dans le temps, au cours de la rotation de la tête.

L'invention sera mieux comprise à l'aide de la description qui suit, en référence au dessin schématique annexé représentant, à titre d'exemple, une forme d'exécution de cette tête de coupe pour débroussailleuse ou taille-bordures.
Figure 1 est une vue en perspective d'une tête de coupe conforme à la présente invention ;
Figure 2 est une vue en plan par dessous, avec coupe partielle, de la tête de coupe de la figure 1 ;
Figure 3 est une vue partielle en coupe de cette tête, suivant III-III de figure 2 ;
Figure 4 est une autre vue partielle en coupe de la même tête, suivant IV-IV de figure 2, à échelle agrandie ;
Figure 5 est une vue en coupe similaire à figure 4, illustrant une variante relative à la section des brins de fil de coupe ;
Figure 6 est une vue en plan par dessous de la même tête de coupe, utilisée avec des brins en nombre différent.

La tête de coupe rotative représentée au dessin, désignée globalement par le repère 1, possède un axe central 2 et résulte de la juxtaposition de deux pièces circulaires 3 et 4, assemblées entre elles au moyen de plusieurs vis 5. La première pièce 3 est de forme annulaire, et la seconde pièce 4 est de forme circulaire bombée, de manière à créer dans la tête 1 un évidement central 6, en forme de cavité sensiblement hémisphérique. La conformation des pièces 3 et 4 accolées définit une gorge annulaire périphérique 7.

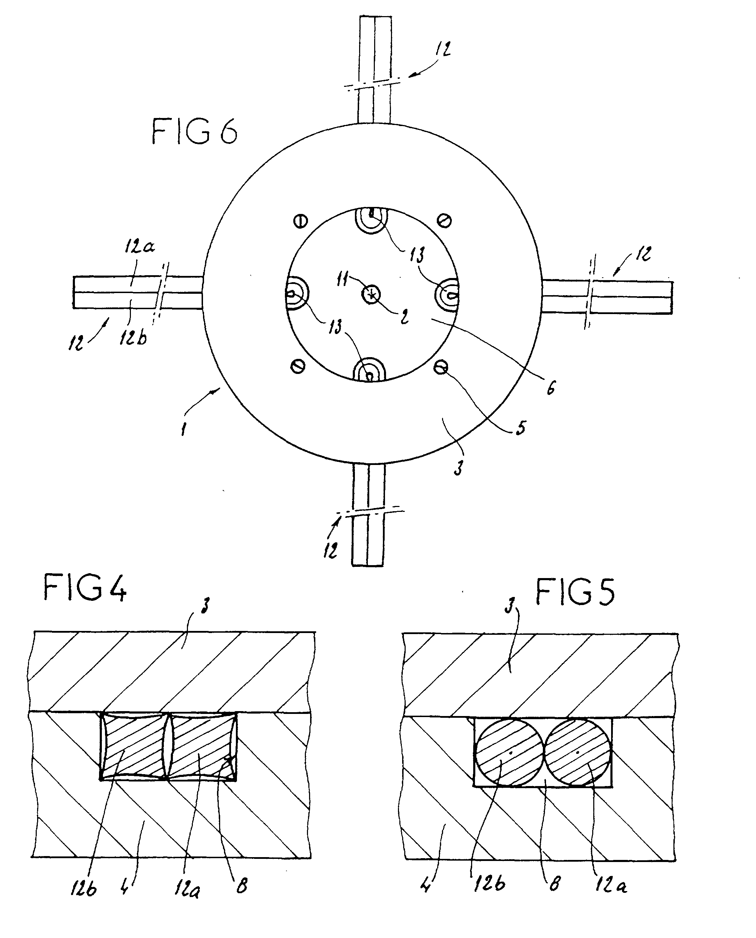

Entre l'évidement central 6 et la gorge périphérique 7 de la tête 1 sont ménagés, dans l'exemple illustré au dessin, quatre passages radiaux 8 espacés par des intervalles angulaires réguliers de 90°. Comme le montrent les figures 4 et 5, chaque passage radial 8 possède une section rectangulaire, avec une longueur égale au double de sa hauteur.

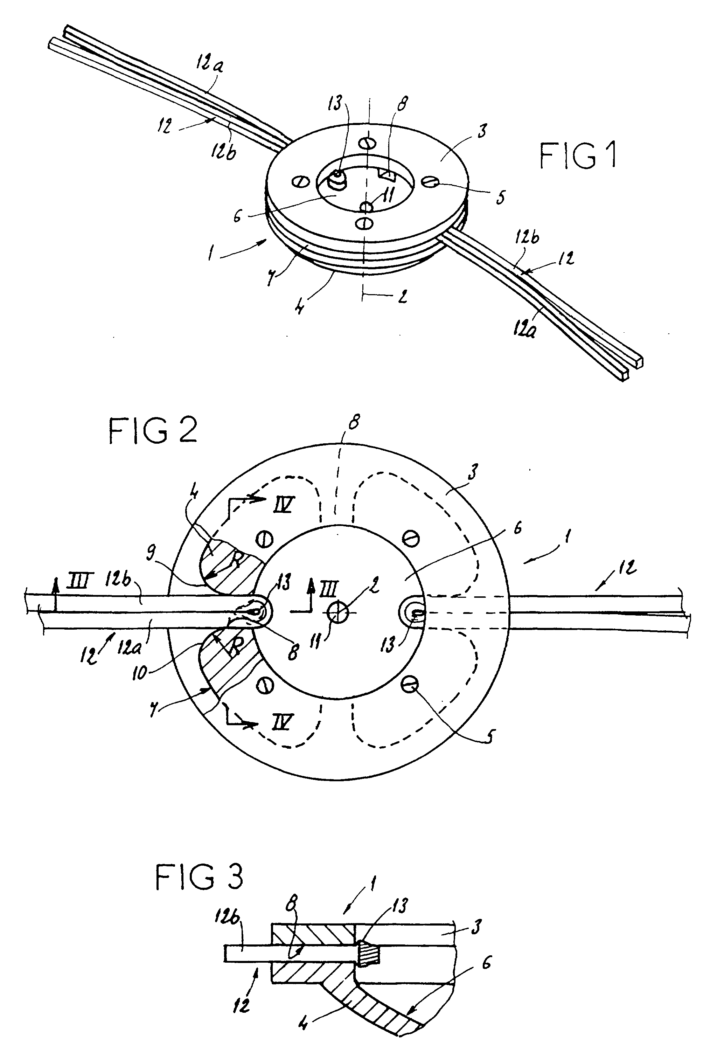

Comme le montre la figure 2, chaque passage radial 8 présente, à son débouché dans la gorge périphérique 7 de la tête 1, un évasement résultant de deux surfaces limitrophes arrondies 9 et 10, disposées symétriquement. Le rayon de courbure R et la longueur développée de chaque surface arrondie 9 ou 10 sont relativement importants, par exemple de l'ordre de 1 à 2 cm. La tête de coupe 1 possède encore un trou taraudé 11 situé sur son axe central 2, au fond de l'évidement central 6, pour sa fixation sur l'appareil tel que débroussailleuse ou taille-bordures, et pour son entraînement en rotation par les moyens moteurs de cet appareil.

Chaque passage radial 8 de la tête 1 peut recevoir un brin 12 de fil de coupe, notamment en matière synthétique, la figure 1 montrant la tête 1 pourvue seulement de deux brins 12 diamétralement opposés, et la figure 6 illustrant la possibilité de garnir cette tête 1 de quatre brins 12, séparés par des intervalles angulaires de 90°.

Chaque brin 12 de fil de coupe est fixé sur la tête 1 en traversant une première fois un passage 8, de l'extérieur vers l'intérieur, puis en étant plié à 180° à l'intérieur de l'évidement central 6, et enfin en traversant une deuxième fois le même passage radial 8, de l'intérieur vers l'extérieur. Au point de pliage à 180° du brin 12, ce pliage forme une boursouflure latérale 13 du brin 12 qui assure sa retenue, par butée contre la surface de l'évidement central 6, autour du débouché intérieur du passage 8, comme montré sur la figure 3.

A leur traversée de ce passage radial 8, les deux parties 12a et 12b résultant du pliage du brin 12 sont juxtaposées, et remplissent la section du passage 8, comme le montre la figure 4. Le brin 12 possède avantageusement une section sensiblement carrée, dont le côté correspond à la hauteur de la section du passage radial 8, donc à la moitié de la longueur de cette section. Plus particulièrement, en utilisant un brin 12 de fil de coupe de section carrée à côtés curvilignes concaves, on favorise la formation de la boursouflure latérale 13 assurant la retenue de ce brin 12.

En variante, comme le montre la figure 5, chaque brin 12 de fil de coupe peut aussi posséder une section circulaire, dont le diamètre correspond à la hauteur de la section du passage radial 8, donc à la moitié de la longueur de la section de ce passage 8.

Chaque brin 12 de fil de coupe est plié à 180° au milieu de sa longueur, de manière à former deux tronçons coupants 12a et 12b, de même longueur, libres et s'étendant parallèlement l'un à l'autre, dans un même plan perpendiculaire à l'axe central 2 de la tête de coupe 1. Un tel doublement des brins 12 assure un fonctionnement particulièrement silencieux de la tête de coupe 1, tout en améliorant le pouvoir coupant.

En cours de fonctionnement, l'une ou l'autre des surfaces arrondies 9 et 10 (selon le sens de rotation de la tête 1) sert de surface d'appui pour le brin 12 correspondant, à sa sortie de la tête 1, ce qui évite le phénomène de " casse à l'oeillet ".

L'on ne s'éloignerait pas du cadre de l'invention, telle que définie dans les revendications annexées :
- en modifiant le nombre de passages radiaux ménagés dans la tête de coupe, ou d'autres détails de forme de cette tête ;
- en réalisant la tête en toutes matières, et en une ou plusieurs pièces ;
- en modifiant le nombre des brins de fil de coupe, fixés sur la tête ;
- en utilisant des brins de fil de coupe de toutes sections, et en toutes matières permettant un pliage avec formation d'une boursouflure ;
- en réalisant ou utilisant la tête de coupe avec des tronçons de fil groupés par deux, de même longueur, libres et parallèles, de manière à réduire le bruit de fonctionnement, quel que soit le moyen de retenue de ces tronçons de fil sur la tête.

## Revendications

1. Tête de coupe rotative pour débroussailleuse ou taille-bordures, du genre de celles utilisant des brins de fil de coupe de relativement faible longueur, retenus individuellement sur la tête, le ou les brins (12) de fil de coupe formant une ou des paires de tronçons coupants de fil (12a, 12b) libres, parallèles et sensiblement de même longueur, **caractérisée en ce que** les deux tronçons coupants de fil (12a, 12b) de la ou chaque paire s'étendent dans un même plan perpendiculaire à l'axe (2) de la tête (1), de manière à réduire le niveau sonore en cours de fonctionnement.

2. Tête de coupe selon la revendication 1, **caractérisée en ce qu'**elle comporte, entre sa périphérie (7) et un évidement central (6), au moins un passage radial (8) de section correspondant au double de la section d'un brin (12) de fil de coupe, de telle sorte que le ou chaque brin (12) de fil de coupe traverse le passage radial (8) correspondant une première fois et est plié à 180° à l'intérieur de l'évidement central (6), pour traverser ledit passage radial (8) une deuxième fois, le pliage du brin (12) à 180° formant, à l'intérieur de l'évidement central (6) de la tête (1), une boursouflure latérale (13) du brin (12) qui assure sa retenue, ce pliage à 180° étant réalisé sensiblement au milieu de la longueur du brin (12) de manière à former, à partir de ce brin (12), les deux tronçons coupants de fil (12a, 12b) libres, parallèles et sensiblement de même longueur, s'étendant dans le même plan perpendiculaire à l'axe (2) de la tête (1).

3. Tête de coupe selon la revendication 2, **caractérisée en ce que** le ou chaque passage radial (8), ménagé dans cette tête (1), présente à son débouché sur la périphérie (7) de ladite tête (1) au moins une surface limitrophe arrondie (9, 10) de rayon de courbure relativement important, et aussi de longueur développée relativement importante, pour l'appui du brin (12) de fil de coupe à sa sortie de la tête (1).

4. Tête de coupe selon la revendication 3, **caractérisée en ce que** le ou chaque passage radial (8) présente deux surfaces d'appui arrondies (9, 10), disposées symétriquement, donnant à ce passage radial (8) un débouché de forme évasée.

## Patentansprüche

1. Rotierender Schneidkopf für Freischneider oder Kantentrimmer, von derjenigen Art, die Schneidfaden-Fasem relativ geringer Länge verwenden, die einzeln am Kopf befestigt sind, wobei die Faser oder die Fasern (12) des Schneidfadens ein Paar oder Paare freier schneidender Fadenabschnitte (12a, 12b) bilden, die parallel laufen und im wesentlichen die gleiche Länge haben, **dadurch gekennzeichnet, dass** die zwei schneidenden Fadenabschnitte (12a, 12b) des oder jedes Paares sich auf einer gleichen, zur Achse (2) des Kopfes (1) senkrecht stehenden Ebene erstrecken, um so den Geräuschpegel während des Betriebs zu reduzieren.

2. Schneidkopf nach Anspruch 1, **dadurch gekennzeichnet, dass** er zwischen seiner Peripherie (7) und einer zentralen Aussparung (6) mindestens einen radialen Durchgang (8) umfasst, dessen Querschnitt dem zweifachen Querschnitt einer Faser (12) des Schneidfadens entspricht, so dass die oder jede Faser (12) des Schneidfadens ein erstes Mal durch den entsprechenden radialen Durchgang läuft und im Inneren der zentralen Aussparung (6) um 180° gefaltet wird, um diesen radialen Durchgang (8) ein zweites Mal zu durchlaufen, wobei das Falten der Faser (12) um 180° im Inneren der zentralen Aussparung (6) des Kopfes (1) eine seitliche Verdickung (13) der Faser (12) bildet, die ihr Festhalten gewährleistet, wobei dieses Falten um 180° im wesentlichen in der Mitte der Länge der Faser (12) ausgeführt wird, und zwar so, dass, ausgehend von dieser Faser (12), die zwei freien schneidenden Faserabschnitte (12a, 12b) gebildet werden, die parallel laufen und im wesentlichen die gleiche Länge haben und sich auf der gleichen, zur Achse (2) des Kopfes (1) senkrecht stehenden Ebene erstrecken.

3. Schneidkopf nach Anspruch 2, **dadurch gekennzeichnet, dass** der oder jeder radiale Durchgang (8), der an diesem Kopf (1) angeordnet ist, an seiner Öffnung zur Peripherie (7) dieses Kopfes (1) hin mindestens eine abgerundete Seiten-Auflagefläche (9, 10) mit relativ großem Krümmungsradius und auch mit relativ großer Durchgangslänge aufweist, als Auflage der Faser (12) des Schneidfadens bei ihrem Austritt aus dem Kopf (1).

4. Schneidkopf nach Anspruch 3, **dadurch gekennzeichnet, dass** der oder jeder radiale Durchgang (8) zwei abgerundete Seiten-Auflageflächen (9, 10) aufweist, die symmetrisch angeordnet sind und diesem radialen Durchgang (8) eine Austrittsöffnung mit konisch erweiterter Form geben.

## Claims

1. A rotary cutting head for brush cutters or edge trimmers, of the kind using relatively short cutting line filaments, individually retained on the head, wherein the cutting line filament or filaments (12) form one or more pairs of free cutting line portions (12a, 12b), which are parallel and approximately of the same length, **characterized in that** both cutting line portions (12a, 12b) of the or each pair are extending in a same plane perpendicular to the axis (2) of the head (1), so as to reduce the sound level during operation.

2. The cutting head as claimed in claim 1, **characterized in that** it includes, between its periphery (7) and a central recess (6), at least one radial passageway (8) of cross section corresponding to twice the cross section of a cutting line filament (12), in such a way that the or each cutting line filament (12) passes through the corresponding radial passageway (8) a first time and is folded through 180° inside the central recess (6), in order to pass through said radial passageway (8) a second time, the 180° folding of the filament (12) forming, inside the central recess (6) of the head (1), a lateral swelling (13) of the filament (12) which ensures its retention, this 180° folding being carried out approximately in the middle of the length of the filament (12) so as to form, from this filament (12), the two free parallel cutting line portions (12a, 12b) of approximately the same length, extending on the same plane perpendicular to the axis (2) of the head (1).

3. The cutting head as claimed in claim 2, **characterized in that** the or each radial passageway (8), made in this head (1), has at its outlet on the periphery (7) of said head (1) at least one rounded adjoining surface (9, 10) of relatively large radius of curvature, and also of relatively large developed length, for the bearing of the cutting line filament (12) at the point where it leaves the head (1).

4. The cutting head as claimed in claim 3, **characterized in that** the or each radial passageway (8) has two rounded bearing surfaces (9, 10) arranged symmetrically, giving this radial passageway (8) an outlet of flared shape.
